# EUROPÄISCHE PATENTANMELDUNG

(11) **EP 3 637 204 A1**
(43) Veröffentlichungstag der Anmeldung: **15.04.2020**
(21) Anmeldenummer: 18199639.8
(22) Anmeldetag: 10.10.2018
(51) Int. Cl.: G05B 15/02

(54) **GEBÄUDEAUTOMATISATIONS-VORRICHTUNG UND VERFAHREN**

(71) Anmelder: Siemens Schweiz AG, 8047 Zürich (CH)
(72) Erfinder: Bischof, Stefan, 1080 Wien (AT); Krammer, Lukas, 1220 Wien (AT); Lechner, Daniel, 2170 Poysdorf (AT); Wechselauer, Josef, 3340 Waidhofen/Ybbs (AT)
(74) Vertreter: Maier, Daniel Oliver

(57) **Zusammenfassung**

Gebäudeautomatisations-Vorrichtung (1) für ein Gebäude (10) mit einem Raum (11, 12), umfassend eine Raum-Steuervorrichtung (100-105), welche dazu eingerichtet ist, mittels einer Regelungs-Vorrichtung (110-115) für den Raum aus einer Ist-Wert-Größe (140-149) und einer, in einem Soll-Wert-Speicher (160-165) gespeicherten Soll-Wert-Größe (150-155) unter Verwendung eines Regel-Verfahrens eine Regel-Größe (170-177) zu bestimmen, wobei das Regel-Verfahren durch Verfahrensparameter bestimmt ist, und ein Sensor (120-129), von welchem eine Sensormessgröße als eine Ist-Wert-Größe (140-149) bestimmbar ist und die Ist-Wert-Größe (140-149) von der Raum-Steuervorrichtung (100-105) abrufbar ist, und ein Aktuator (130-137), zu welchem die Regel-Größe (170-177) von der Raum-Steuervorrichtung (100-105) übertragbar ist und welcher durch die Regel-Größe (170-177) ansteuerbar ist.

Die Gebäudeautomatisations-Vorrichtung (1) umfasst ferner eine Konfigurations-Vorrichtung (2), welche dazu eingerichtet ist, die Ist-Wert-Größe (140-149) und die Soll-Wert-Größe (150-155) von der Raum-Steuervorrichtung (100-105) abzufragen, und den Verfahrensparameter aus Gebäude-Daten (5), Regel-Daten (6) und der Ist-Wert-Größe (140-149) und der Soll-Wert-Größe (150-155) neu zu bestimmen, und den neu bestimmten Verfahrensparameter an die Raum-Steuervorrichtung (100-105) zur weiteren Verwendung im Regel-Verfahren zu übertragen.

## Beschreibung

Die Erfindung betrifft eine Gebäudeautomatisations-Vorrichtung für zumindest ein Gebäude mit zumindest einem Raum. Die Gebäudeautomatisations-Vorrichtung umfasst dabei zumindest eine Raum-Steuervorrichtung umfassend zumindest eine Regelungs-Vorrichtung und einen Soll-Wert-Speicher, welche Raum-Steuervorrichtung dazu eingerichtet ist, mittels der zumindest einen Regelungs-Vorrichtung für den zumindest einen Raum aus zumindest einer Ist-Wert-Größe und zumindest einer, in dem Soll-Wert-Speicher gespeicherten Soll-Wert-Größe unter Verwendung eines Regel-Verfahrens zumindest eine Regel-Größe zu bestimmen und auszugeben, wobei das Regel-Verfahren durch zumindest einen Verfahrensparameter bestimmt ist.

Die Gebäudeautomatisations-Vorrichtung umfasst ferner zumindest einen Sensor, von welchem zumindest eine Sensormessgröße als zumindest eine Ist-Wert-Größe bestimmbar ist und die zumindest eine Ist-Wert-Größe von der zumindest einen Raum-Steuervorrichtung abrufbar ist.

Außerdem umfasst die Gebäudeautomatisations-Vorrichtung zumindest einen Aktuator, zu welchem die zumindest eine Regel-Größe von der zumindest einen Raum-Steuervorrichtung übertragbar ist und welcher anhand der zumindest einen Regel-Größe ansteuerbar ist.

Ferner betrifft die Erfindung ein Gebäudeautomatisations-Verfahren Gebäudeautomatisations-Verfahren für eine Gebäudeautomatisations-Vorrichtung für zumindest ein Gebäude mit zumindest einem Raum, wobei mittels zumindest einer Regelungs-Vorrichtung für den zumindest einen Raum aus zumindest einer Ist-Wert-Größe und zumindest einer, in einem Soll-Wert-Speicher gespeicherten Soll-Wert-Größe unter Verwendung eines Regel-Verfahrens zumindest eine Regel-Größe bestimmt und ausgegeben wird, wobei das Regel-Verfahren durch zumindest einen Verfahrensparameter bestimmt wird,
und wobei von zumindest einem Sensor zumindest eine Sensormessgröße als zumindest eine Ist-Wert-Größe bestimmt wird und die zumindest eine Ist-Wert-Größe von der zumindest einen Raum-Steuervorrichtung abgerufen wird,
und wobei die zumindest eine Regel-Größe von der zumindest einen Raum-Steuervorrichtung an zumindest einen Aktuator übertragen wird, wobei der zumindest eine Aktuator anhand der zumindest einen Regel-Größe angesteuert wird.

Gebäudeautomatisation kann dazu dienen, physikalische Zustände in einem Raum oder einem Gebäude entsprechend einer gewünschten Raumtemperatur, einer für das menschliche Wohlbefinden angenehm empfundenen Helligkeit, Luftfeuchtigkeit oder eines CO2-Gehalts der Luft zu konditionieren. Dabei können im Raum befindliche Personen beispielsweise die entsprechenden Raumparameter vorgeben und eine zugeordnete Raum-Steuervorrichtung kann versuchen, gewünschte Soll-Werte durch gezielte Ansteuerung von entsprechenden Aktuatoren zu erreichen, wie beispielsweise die Steuerung von Heizelementen oder das Öffnen von Fenstern oder Jalousien.

Es kann bei einer Raum-Steuervorrichtung nach dem Stand der Technik bei einer Erst-Inbetriebnahme jedoch sehr aufwändig sein, diese zu programmieren oder zu konfigurieren, da die physikalischen Zusammenhänge zwischen Sensor, Sollwert und Aktuator bekannt sein müssen und dafür Kontrollstrategien ausgewählt und konfiguriert werden müssen. Eine zusätzliche Komplexität schafft die Tatsache, dass physikalische Zustände von ein oder mehreren Aktuatoren beeinflusst werden können und einzelne Aktuatoren eine oder mehrere physikalische Zustände beeinflussen können.

Beispielsweise können Aktuatoren zum Öffnen und Schließen von Abschattungsvorrichtungen Raumtemperatur und Helligkeit gleichermaßen in Abhängigkeit von äußeren Bedingungen beeinflussen. Die Raumtemperatur kann aber von unterschiedlichen HeizungsaktuatorAktuatoren (Lüftungsanlage, Flächenheizung) als auch von Aktuatoren zur Steuerung von Abschattungsvorrichtungen beeinflusst werden. Die Wirkungsweise der einzelnen Aktuatoren auf unterschiedliche physikalischen Zuständen ist wiederum abhängig von äußeren Bedingungen. Am Beispiel der Beeinflussung der Raumtemperatur durch Abschattungsvorrichtungen wären dies beispielsweise Tageszeit sowie Größe und Ausrichtung des Raumes und der verschatteten Fenster. Die Programmierung und Konfiguration des Gesamtsystems muss meist individuell für jedes Gebäude durchgeführt werden und kann sehr stark von der persönlichen Erfahrung der durchführenden Person abhängen. Außerdem ist die Programmierung und Konfiguration nach dem Stand der Technik statisch, das heißt, sie kann sich nicht von selbst an neue oder geänderte Bedingungen anpassen. Allerdings kommt es häufig vor, dass sich die Bedingungen im Raum ändern (wie beispielsweise durch geänderte Aktuator-Ausführungen, jahreszeitabhängige Änderungen von Betriebsmodi oder durch kurze oder längere Wartungsarbeiten an Systemen der Gebäudetechnik), die eine Anpassung der Programmierung und Konfiguration notwendig machen. Durch die Komplexität eines solchen Systems und sehr unterschiedliche Programmierungen und Konfigurationen solcher Raum-Steuervorrichtungen kann die Wartung daher sehr schwierig sein.

Es ist eine Aufgabe der Erfindung die genannten Nachteile zu überwinden.

Die Aufgabe wird durch eine Gebäudeautomatisations-Vorrichtung der eingangs genannten Art gelöst, indem die Gebäudeautomatisations-Vorrichtung ferner eine Konfigurations-Vorrichtung umfasst, die dazu eingerichtet ist,
a) die zumindest eine Ist-Wert-Größe und die zumindest eine Soll-Wert-Größe von der zumindest einen Raum-Steuervorrichtung abzufragen und vorzugsweise in der Datenbank zu speichern, und
b) den zumindest einen Verfahrensparameter aus Gebäude-Daten, Regel-Daten und der gespeicherten zumindest einen Ist-Wert-Größe und der zumindest einen Soll-Wert-Größe neu zu bestimmen und vorzugsweise in der Datenbank zu speichern, und
c) den neu bestimmten zumindest einen Verfahrensparameter an die zumindest eine Raum-Steuervorrichtung zur weiteren Verwendung im Regel-Verfahren zu übertragen.

Bevorzugt umfasst die Konfigurations-Vorrichtung eine Analyse-Vorrichtung und eine Datenbank, wobei in der Datenbank Gebäude-Daten und Regel-Daten gespeichert sind.

Bevorzugt führt die Neubestimmung des zumindest einen Verfahrensparameter die Analysevorrichtung durch.

Dadurch wird erreicht, dass eine Konfiguration der Gebäudeautomatisations-Vorrichtung neu ermittelt beziehungsweise gesetzt wird, und somit eine Anpassung an unterschiedliche Situationen, wie beispielsweise Witterungsbedingungen, Sonnenstände, Jahreszeiten oder Öffnungszustände von Beschattungselementen oder Fenstern erfolgen kann.

Zudem kann die Neukonfiguration zentral erfolgen, sodass mehrere Räume oder Gebäude erfasst werden können, wodurch die Neukonfiguration stark vereinfacht wird und Kostenvorteile entstehen.

Bevorzugt durchläuft die Vorrichtung die Vorgänge a), b) und c) in derselben Reihenfolge.

Es ist günstig, wenn ferner die Gebäude-Daten zumindest eine bauphysikalische Eigenschaft des zumindest einen Gebäudes oder des zumindest einen Raumes, sowie zumindest eine technische Eigenschaft des zumindest einen Sensors oder des zumindest einen Aktuators umfassen. Durch ein Datenmodell einer derartigen Weiterbildung der Erfindung können auf besonders einfache Weise die relevanten Eigenschaften einzelner Einheiten für eine Gebäudeautomatisation gespeichert und verarbeitet werden.

In der Praxis ist es vorteilhaft, wenn die Gebäude-Daten nach dem ISO 16739:2013-Standard, Edition 1 mit Pubikationsdatum 2013-04, für BIM-Daten definiert sind, da für viele Gebäudeteile oder Sensoren beziehungsweise Aktuatoren derartige Daten verfügbar sind.

Der Begriff Building Information Modeling (BIM) beschreibt eine Methode der optimierten Planung, Ausführung und Bewirtschaftung von Gebäuden und anderen Bauwerken mit Hilfe von Software. Dabei werden alle relevanten Bauwerksdaten digital modelliert, kombiniert und erfasst. Das Bauwerk ist als virtuelles Modell auch geometrisch visualisiert. Building Information Modeling findet Anwendung beispielsweise im Bauwesen zur Bauplanung und Bauausführung. Der ISO 16739:2013-Standard definiert die Form von BIM-Daten.

BIM kann individuelle Bauteilelemente enthalten, die nicht nur räumlich in einem CAD-System dargestellt werden können, sondern auch mit sämtlichen Informationen versehen sein können, beispielsweise in welchem Raum oder Geschoss das Element installiert ist, und welche Materialisierung es besitzt und wieviel es kostet. Aus einem BIM Modell können Pläne, Schnitte und Bauteillisten generiert werden, woraus leicht erkennbar ist, dass eine Änderung andere Darstellungen automatisch aktualisieren kann, was ein Änderungsmanagement enorm unterstützen kann. BIM ermöglicht auch die Analyse und Simulation von Modellinformationen, wie für Statikberechnungen, Energiesimulationen, Licht- und Schattenstudien.

Die Erfindung kann vorteilhaft weitergebildet werden, indem ferner die Regel-Daten zumindest einen funktionalen Zusammenhang zwischen der zumindest einen bauphysikalischen Eigenschaft und der zumindest einen technischen Eigenschaft umfassen, sowie bevorzugt zumindest einen Regelkreis-Parameter aufweisen. Durch ein Datenmodell einer derartigen Weiterbildung der Erfindung können auf besonders einfache Weise die relevanten Eigenschaften der Zusammenhänge zwischen einzelnen Einheiten für eine Gebäudeautomatisation gespeichert und verarbeitet werden.

Dabei ist es vorteilhaft, wenn die zumindest eine Ist-Wert-Größe und/oder Soll-Wert-Größe ein Temperatur-Wert, ein Luftfeuchtigkeits-Wert oder ein CO2-Wert des entsprechenden Sensors ist.

Außerdem ist es vorteilhaft, wenn die zumindest eine Ist-Wert-Größe und/oder Soll-Wert-Größe ein Zustands-Wert, welcher einen Betriebszustand eines Lüftungssystems oder eines Beleuchtungssystems, oder einen Zustands-Wert, welcher den Öffnungszustand eines Fensters, einer Tür, einer Jalousie oder eines Rollladens repräsentiert, des entsprechenden Aktuators ist.

In einer Weiterbildung der Erfindung ist es zusätzlich vorteilhaft, wenn die Regel-Daten zumindest einen funktionalen Zusammenhang zwischen dem zumindest einen Aktuator und dem zumindest einen Sensor umfassen.

Die Erfindung kann weiterentwickelt werden, indem der zumindest eine Verfahrensparameter mittels einem in der Datenbank hinterlegten Expertensystem oder einem System, welches ein Verfahren auf Basis einer Ontologie verwendet, bestimmt ist.

Wissensbasierte Systeme modellieren eine Form rationaler Intelligenz für sogenannte Expertensysteme. Diese sind in der Lage, auf eine Frage des Anwenders auf Grundlage formalisierten Fachwissens und daraus gezogener logischer Schlüsse Antworten zu liefern. Ein wissensbasiertes System nutzt Informationen (z.B. Fakten und Regeln) aus einer Wissensbasis, um neues Wissen mittels einer Inferenzkomponente abzuleiten. Ein solches wissensbasiertes System benötigt sohin auch Schnittstellen zum Befüllen der Wissensbasis sowie der Inferenzen als auch zur Ausgabe des abgeleiteten Wissens.

Ein wissensbasiertes System kann auf Ontologien basieren. Ontologien sind in der Informatik meist sprachlich gefasste und formal geordnete Darstellungen einer Menge von Begrifflichkeiten und der zwischen ihnen bestehenden Beziehungen in einem bestimmten Gegenstandsbereich. Sie werden dazu genutzt, "Wissen" in digitalisierter und formaler Form zwischen Anwendungsprogrammen und Diensten auszutauschen. Wissen umfasst dabei sowohl Allgemeinwissen als auch Wissen über sehr spezielle Themengebiete und Vorgänge.

Ontologien enthalten Inferenz- und Integritätsregeln, also Regeln zu Schlussfolgerungen und zur Gewährleistung ihrer Gültigkeit. Ontologien sind mit der Idee des semantischen Webs Teil der Wissensrepräsentation im Teilgebiet der Künstliche Intelligenz. Im Unterschied zu einer Taxonomie, die nur eine hierarchische Untergliederung bildet, stellt eine Ontologie ein Netzwerk von Informationen mit logischen Relationen dar.

Ontologien können über eine hohe semantische Ausdrucksstärke verfügen und sind geeignet, komplexe Datenmodelle oder Wissensrepräsentationen darzustellen.

Analog zu einer Datenbank, in der Struktur (Datenbankschema) und Inhalt (Daten) ein Ganzes bilden, gehören auch bei einer Ontologie die Regeln und die Begriffe zusammen. Während klassische Datenbanken keine Informationen über die Bedeutung der gespeicherten Daten haben, besitzen Ontologien eine formale Beschreibung der Daten sowie Regeln über deren Zusammenhang. Diese Regeln erlauben es, Rückschlüsse aus den vorhandenen Daten zu ziehen, Widersprüche in den Daten zu erkennen und fehlendes Wissen selbstständig aus dem Vorhandenen zu ergänzen. Diese Rückschlüsse werden durch Inferenz abgeleitet, also durch logisches Folgern.

Unter "Ontology learning" kann der Prozess beschrieben werden, bei welchem eine Ontologie durch automatische Verfahren weiteres Wissen akquiriert und dadurch an Umfang und Struktur zunimmt. Dafür spielen Inferenzen eine wichtige Rolle. In diesem Prozess wird Wissen durch einen automatisierten Prozess erzeugt, während Ontologien sonst durch Eingaben menschlicher Experten Wissen hinzugewinnen.

Es besteht auch die Möglichkeit, Relationen über Relationen und Regeln zu verwenden, was Ontologien von anderen Begriffssystemen unterscheiden.

Allgemein Ontologien weisen auf:
- Begriffe (englisch "concepts"): Die Beschreibung gemeinsamer Eigenschaften wird als Begriff definiert (z. B. "Stadt" oder "Land"). Begriffe werden auch als Klassen bezeichnet. Diese können in einer Klassenstruktur mit Über- und Unterklasse angeordnet werden.
- Typen: Typen repräsentieren Objekttypen in der Ontologie und stellen die zur Verfügung stehenden Typen in Klassen dar. Diese werden anhand vorher definierter Begriffe erzeugt und als Types bezeichnet (z. B. Stadt als Instanz des Begriffs topologisches Element der Klasse Punkte oder Fluss als Instanz des Begriffs topologisches Element der Klasse Linien)
- Instanzen: Instanzen repräsentieren Objekte in der Ontologie. Sie werden anhand vorher definierter Begriffe erzeugt und auch als Individuals bezeichnet (z. B. München als Instanz des Begriffs topologischer Ort vom Typ Stadt oder Deutschland als Instanz des Begriffs topologischer Ort vom Typ Land).
- Relationen: Relationen werden verwendet, um zu beschreiben, welche Beziehungen zwischen den Instanzen bestehen (z. B. Stadt München liegt in Land Deutschland) und auch als Eigenschaften bezeichnet.
- Attribute: Attribute werden verwendet, um Instanzen konkrete Werte zuzuweisen.
- Vererbung: Es ist möglich, Relationen und Eigenschaften der Begriffe zu vererben. Dabei werden alle Eigenschaften an das erbende Element weitergegeben. Mehrfachvererbung bei Begriffen ist grundsätzlich möglich. Durch den Einsatz von Transitivität können Instanzen in einer Bottom-Up-Hierarchie aufgebaut werden. Dabei spricht man von Delegation.
- Axiome: Axiome sind Aussagen innerhalb der Ontologie, die immer wahr sind. Diese werden normalerweise dazu verwendet, Wissen zu repräsentieren, das nicht aus anderen Begriffen abgeleitet werden kann (z. B. "Zwischen Amerika und Europa existiert keine Zugverbindung.").

Grundsätzlich unterteilt man Ontologien in zwei Typen:
- Lightweight-Ontologien: beinhalten Begriffe, Taxonomien und Beziehungen zwischen Begriffen und Eigenschaften, welche diese beschreiben.
- Heavyweight-Ontologien: sind eine Erweiterung von Lightweight-Ontologien und fügen diesen Axiome und Einschränkungen hinzu, wodurch die beabsichtigte Bedeutung einzelner Aussagen innerhalb der Ontologie klarer wird.

Ein wissensbasiertes System kann für eine Gebäudeautomatisierung verwendet werden, um beispielsweise eine optimale Konfiguration von Aktuatoren zur Herstellung der vom Benutzer gewünschten physikalischen Zustände in Räumen herzustellen, sowie eine Parametrierung der Regelungskomponente im Sinne der Ein- und Ausgabeparameter vorzunehmen.

Dabei kann ein solches wissensbasiertes System Ontologien oder ähnliche Konzepte verwenden als Wissensbasis zur Darstellung von:
- Fakten zum konkreten Gebäude und dessen technische Systemen,
- Qualitätskriterien technischer Systeme,
- allgemeinen Regeln, die Zusammenhänge zwischen Aktuatoren und physikalischen Zuständen im Raum,
- äußeren Einflüssen und
- Regelstrategien.

In der Wissensbasis kann auch vermerkt sein, welche Einflussmöglichkeiten ein Benutzer eines Raumes/Gebäudes auf einzelne physikalische Größen hat.

Zu konkreten Fakten von Gebäuden gehört beispielsweise die Ausrichtung eines Raumes in Bezug auf die Ausrichtung der Fensterflächen.

Technische Systeme, die als Aktuatoren im Gebäude physikalische Zustände beeinflussen können, sind beispielsweise Flächenheizungen, Lüftungssysteme oder Abschattungsvorrichtungen.

Aus einem Gebäudemodell, in welchem BIM-Daten im Format "Industry Foundation Class" (IFC) spezifiziert sind, kann eine entsprechende Ontologie (z.B. IFC OWL) definiert werden. Somit lassen sich einzelne Instanzen von Ontologien für einzelne Gebäude oder Räume ableiten.

Komponenten zu technischen Systemen in Gebäuden werden in IFC z.B. als "IFCHVACDOMAIN" abgebildet, Fenster im Raum als "IFCWINDOW". Die Komponenten können über Relationen in IFC OWL in Verbindung gesetzt werden.

Qualitätskriterien ergänzen die technischen Systeme im Gebäude mit Attributen, die eine spätere Optimierung ermöglichen. So können hier beispielsweise Ordnungsrelationen hinsichtlich verschiedener Parameter wie CO2 dargestellt werden. Die Ontologie muss dabei die notwendige Information speichern um Informationen wie beispielsweise "die Erhöhung der Raumtemperatur von 21°C auf 22°C mit dem Aktuator X emittiert 0,5 kg CO2 zu ermitteln.

Allgemeine Regeln spezifizieren die physischen Zusammenhänge. Dabei werden mittels Relationen und Typen die Zusammenhänge spezifiziert. Beispielsweise kann das Prädikat "beeinflusst direkt" als Relation für den Zusammenhang zwischen "Flächenheizung" und "Temperatur", das Prädikat "deckt ab" als Relation für "Flächenheizung" und "Wohnzimmer" oder das Prädikat "hat Sollwert" als Relation zwischen "Temperatur" und "Soll-Temperatur" verwendet werden.

Äußere Einflüsse sind beispielsweise Sonneneinstrahlung, Tageszeit oder Parameter von primären oder externen Heizsystemen.

Mithilfe des Inferenzsystems des wissensbasierten Systems lassen sich sohin aus den zur Verfügung stehenden Daten dynamisch Regelstrategien zur Herstellung bestimmter physikalischer Sollzustände auswählen und automatisch mit den entsprechenden Ein- und Ausgängen verbinden. Dabei werden auch Wechselwirkungen auf andere Parameter berücksichtigt und entsprechend die Regelstrategie angepasst.

So kann beispielsweise aus einer Relation geschlossen werden, dass eine bestimmte Verschattungseinrichtung, ein bestimmter Heizungsaktuator (z.B. Flächenheizung) und ein Aktuator eines Lüftungssystems in einem Raum wirken und dessen Temperatur beeinflussen können. Weiters kann aus den externen Daten entnommen werden, ob eine Beeinflussung zum aktuellen Zeitpunkt möglich ist. Beispielsweise kann bei Dunkelheit die Temperatur nicht mit der Verschattungseinrichtung beeinflusst werden. Aus den Qualitätskriterien lässt sich ein passender Aktuator für den aktuellen Bereich auswählen. Außerdem kann ein passender Regler ausgewählt werden. Gibt es unerwünschte Wechselwirkungen auf andere Parameter, beispielsweise eine Blendung durch geöffnete Verschattungseinrichtung, fließen diese in die Bewertung der Aktuatoren mit ein.

Aus den im System enthaltenen Daten (Gebäudedaten aus BIM, Messwerte aus dem Gebäude, Sollwerte der Benutzer, externe Daten wie Wetterdaten, priorisierte Regelstrategie vorgegeben vom Benutzer wie z.B. energiesparende Regelung, etc.) wird eine optimale Regelstrategie unter Einbeziehung aller Parameter abgeleitet. Die Regelstrategie wird daraufhin mittels Instanzierung unterschiedlicher Regler-Module sowie deren Verschaltung realisiert und bei Änderungen der Parameter angepasst.

Ergibt sich aus dem Wissen beispielsweise die Anweisung, dass ein Raum erwärmt werden soll, werden passende Aktuatoren zur Temperatursteuerung des Raumes und deren Auswirkungen in Betracht gezogen (z.B. elektrische Heizung, Ventilation, etc.). Für diese Aktuatoren werden daraufhin geeignete Regler (z.B. ein Zweipunktregler) aus der verfügbaren Menge an Reglern instanziert und dessen Ein- und Ausgänge entsprechend verschalten (Eingänge der Regler sind Sollwert und Messwert der Raumtemperatur, Ausgang zur Ansteuerung des Aktuators).

Auch ein Expertensystem kann in der Gebäudeautomatisierung verwendet werden. Dieses kann ein Computerprogramm sein, welches Menschen bei der Lösung von komplexeren Problemen wie ein Experte unterstützen kann, indem es Handlungsempfehlungen aus einer Wissensbasis ableitet. Über sogenannte Wenn-Dann-Beziehungen kann menschliches Wissen, beispielsweise Zusammenhänge, in Form einer Wissensbasis dargestellt werden.

Ein Expertensystem enthält die Funktionalität, um die Wissensbasis zu erstellen und zu
verbessern (Wissenserwerbskomponente), zu
verarbeiten (Problemlösungskomponente) und dem Nutzer verständlich zu machen (Erklärungskomponente). Expertensysteme sind ein Teilbereich der künstlichen Intelligenz.

Die Erfindung kann aber auch weiterentwickelt werden, indem zusätzlich zumindest eine Außensensor-Vorrichtung umfasst ist, welche dazu eingerichtet ist, zumindest eine Außensensor-Messgröße zumindest eines Außensensors als zumindest eine Außen-Ist-Wert-Größe zu erfassen und die Analyse-Vorrichtung dazu eingerichtet ist, bei der Neubestimmung des zumindest einen Verfahrensparameters die zumindest eine Außen-Ist-Wert-Größe zu berücksichtigen. Die Außensensor-Vorrichtung kann einen oder mehrere Sensoren aufweisen, welche sich außerhalb des Gebäudes befinden. Alternativ kann beispielsweise auf Daten zurückgegriffen werden, welche über eine Internetverbindung der Außensensor-Vorrichtung bereitgestellt werden.

Ferner kann die Konfigurations-Vorrichtung dazu eingerichtet sein, die zumindest eine Außen-Ist-Wert-Größe in Form von Außen-Daten in der Datenbank zu speichern und bei der Neubestimmung des zumindest einen Verfahrensparameters die Außen-Daten abzurufen.

Es ist vorteilhaft, wenn die Gebäude-Daten zumindest Eigenschaften hinsichtlich thermischer Durchlässigkeit, Luft-Ventilation oder Beleuchtung des zumindest einen Gebäudes und/oder des zumindest einen Raumes beschreiben. Dadurch kann erreicht werden, dass für die Raumautomatisierung optimale Parameter zur Erreichung des menschlichen Wohlbefindens berücksichtigt werden.

Es ist besonders vorteilhaft, wenn die Konfigurations-Vorrichtung ferner eine Zeitbasis umfasst und dazu eingerichtet ist, nach einer von der Zeitbasis vorgegebenen Zeitdauer den zumindest einen Verfahrensparameter für das Regel-Verfahren der zumindest einen Raum-Steuervorrichtung von der Analyse-Vorrichtung neu zu bestimmen und an die zumindest eine Raum-Steuervorrichtung zu übertragen. Durch eine permanente wiederkehrende Neubestimmung des zumindest einen Verfahrensparameters wird erreicht, dass eine Anpassung der Gebäudesituation an Störeinflüsse oder ein geändertes Verhalten, beispielsweise durch den Sonnenstand, durch die jeweilige Raum-Steuervorrichtung berücksichtigt werden kann.

Die Aufgabe der Erfindung wird auch durch ein Gebäudeautomatisations-Verfahren der eingangs genannten Art gelöst, indem von einer Konfigurations-Vorrichtung (2) der Gebäudeautomatisations-Vorrichtung mit einer Analyse-Vorrichtung und einer Datenbank, in welcher Datenbank Gebäude-Daten und Regel-Daten gespeichert sind, folgende Verfahrensschritte durchgeführt werden:
a) Abfragen der zumindest einen Ist-Wert-Größe und der zumindest einen Soll-Wert-Größe von der zumindest einen Raum-Steuervorrichtung,
b) Neubestimmen des zumindest einen Verfahrensparameters aus Gebäude-Daten, Regel-Daten und der gespeicherten zumindest einen Ist-Wert-Größe und der zumindest einen Soll-Wert-Größe,
c) Übertragen des neu bestimmten zumindest einen Verfahrensparameters an die zumindest eine Raum-Steuervorrichtung zur weiteren Verwendung im Regel-Verfahren.

Die zumindest eine Ist-Wert-Größe und die zumindest eine Soll-Wert-Größe kann im Schritt a) zur einfacheren Verarbeitung auch gespeichert werden.

Der zumindest eine Verfahrensparameter kann im Schritt b) zur einfacheren Verarbeitung beispielsweise in der Datenbank gespeichert werden.

Das Neubestimmen im Schritt b) erfolgt vorzugsweise durch die Analyse-Vorrichtung.

Bevorzugt wird das Verfahren in der Reihenfolge a), b) und c) durchlaufen.

Dadurch wird erreicht, dass eine Konfiguration der Gebäudeautomatisations-Vorrichtung neu bestimmt wird, und somit eine Anpassung an geänderte Situationen, wie beispielsweise Witterungsbedingungen, Sonnenstände, Jahreszeiten oder Öffnungszustände von Beschattungselementen oder Fenstern erfolgen kann.

Zudem kann die Neukonfiguration zentral erfolgen, sodass mehrere Räume oder Gebäude erfasst werden können, wodurch die Neukonfiguration stark vereinfacht wird und Kostenvorteile entstehen.

Die Vorteile des erfindungsgemäßen Verfahrens und die Vorteile der nachfolgend genannten Weiterbildungen der Erfindung decken sich mit den entsprechenden Vorteilen der erfindungsgemäßen Vorrichtung.

Es ist günstig, wenn die Gebäude-Daten zumindest eine bauphysikalische Eigenschaft des zumindest einen Gebäudes oder des zumindest einen Raumes, welche bevorzugt nach dem ISO 16739:2013-Standard für BIM-Daten definiert sind, sowie zumindest eine technische Eigenschaft des zumindest einen Sensors oder des zumindest einen Aktuators umfassen.

In einer Weiterbildung der Erfindung weisen die Regel-Daten zumindest einen funktionalen Zusammenhang zwischen der zumindest einen bauphysikalischen Eigenschaft und der zumindest einen technischen Eigenschaft umfassen, sowie bevorzugt zumindest einen Regelkreis-Parameter auf.

Es ist günstig, wenn die Regel-Daten zumindest einen funktionalen Zusammenhang zwischen dem zumindest einen Aktuator und dem zumindest einen Sensor umfassen.

In einer Weiterbildung der Erfindung ist der zumindest eine Verfahrensparameter mittels einem in der Datenbank hinterlegten Expertensystem oder einem System, welches ein Verfahren auf Basis einer Ontologie verwendet, bestimmt.

Die Erfindung kann vorteilhaft weitergebildet werden, wenn zumindest eine Außensensor-Messgröße zumindest eines Außensensors zumindest einer Außensensor-Vorrichtung als zumindest eine Außen-Ist-Wert-Größe erfasst wird, und bei der Neubestimmung des zumindest einen Verfahrensparameters im Schritt c) von der Analyse-Vorrichtung die zumindest eine Außen-Ist-Wert-Größe berücksichtigt wird.

Es ist günstig, wenn die Gebäude-Daten zumindest Eigenschaften hinsichtlich thermischer Durchlässigkeit, Ventilation oder Beleuchtung, eines Gebäudes und/oder eines darin befindlichen Raumes, wofür die Gebäudeautomatisations-Vorrichtung vorgesehen ist, beschreiben.

Die Erfindung kann vorteilhaft weitergebildet werden, wenn nach einer von einer Zeitbasis der Konfigurations-Vorrichtung vorgegebenen Zeitdauer der zumindest eine Verfahrensparameter für das Regel-Verfahren der zumindest einen Raum-Steuervorrichtung von der Analyse-Vorrichtung neu bestimmt wird und an die zumindest eine Raum-Steuervorrichtung übertragen wird.

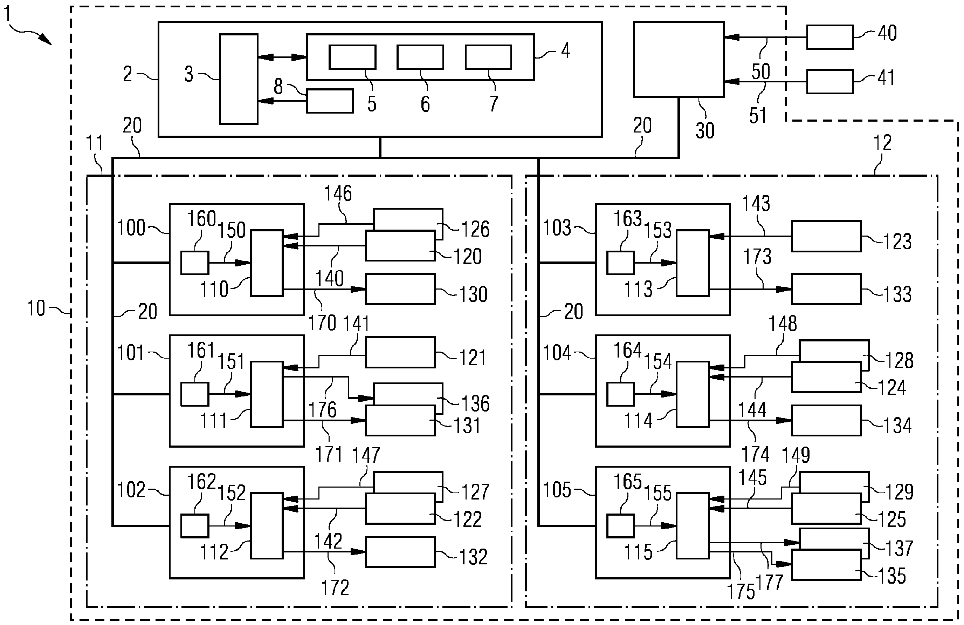

Die Erfindung wird nachfolgend anhand eines in der beigeschlossenen Zeichnung dargestellten Ausführungsbeispiels näher erläutert. In Fig. 1 ist ein Ausführungsbeispiel einer erfindungsgemäßen Gebäudeautomatisations-Vorrichtung gezeigt.

Fig. 1 zeigt ein Ausführungsbeispiel einer Gebäudeautomatisations-Vorrichtung 1 für ein Gebäude 10 mit zwei Räumen 11, 12.

Gebäudeautomatisations-Vorrichtung 1 umfasst Raum-Steuervorrichtungen 100-105 für Räume 11 und 12, welche dazu eingerichtet sind, mittels jeweils einer Regelungs-Vorrichtung 110-115 für den jeweiligen Raum aus Ist-Wert-Größen 140-149 und, in einem Soll-Wert-Speicher 160-165 gespeicherten Soll-Wert-Größen 150-155 unter Verwendung eines Regel-Verfahrens Regel-Größen 170-177 zu bestimmen und auszugeben. Das Regel-Verfahren dabei durch zumindest einen Verfahrensparameter bestimmt ist,

Ferner umfasst die Gebäudeautomatisations-Vorrichtung 1 Sensoren 120-129, von welchen jeweils zumindest eine Sensormessgröße als Ist-Wert-Größe 140-149 bestimmbar ist und die jeweilige Ist-Wert-Größe 140-149 von der jeweiligen Raum-Steuervorrichtung 100-105 abrufbar ist.

Beispielsweise erfassen die Sensoren 120 und 126 die Ist-Wert-Größen 140 und 146, welche der Regelungs-Vorrichtung 110 zugeführt werden. Außerdem umfasst die Gebäudeautomatisations-Vorrichtung 1 Aktuatoren 130-137, zu welchen jeweils die entsprechenden Regel-Größen 170-177 von der jeweiligen Raum-Steuervorrichtung 100-105 übertragbar ist und welche durch Regel-Größen 170-177 ansteuerbar sind.

Beispielsweise steuert die Regelungs-Vorrichtung 111 mittels der Regel-Größen 171 und 176 die Aktuatoren 131 und 136 an.

Im gezeigten Ausführungsbeispiel erfassen die Sensoren 125 und 129 die Ist-Wert-Größen 145 und 149, welche der Regelungs-Vorrichtung 115 zugeführt werden, welche die mittels der Regel-Größen 175 und 177 die Aktuatoren 135 und 137 ansteuert.

Die Gebäudeautomatisations-Vorrichtung 1 weist ferner eine Konfigurations-Vorrichtung 2 mit einer Analyse-Vorrichtung 3 und einer Datenbank 4, in welcher Datenbank 4 Gebäude-Daten 5 und Regel-Daten 6 gespeichert sind, auf.

Die Konfigurations-Vorrichtung 2 ist dazu eingerichtet, die Ist-Wert-Größen 140-149 und die Soll-Wert-Größen 150-155 von der jeweiligen Raum-Steuervorrichtung 100-105 abzufragen und in der Datenbank 4 zu speichern.

Die Analyse-Vorrichtung 3 ist dazu eingerichtet, den zumindest einen Verfahrensparameter aus Gebäude-Daten 5, Regel-Daten 6 und den gespeicherten Ist-Wert-Größen 140-149 und den Soll-Wert-Größen 150-155 neu zu bestimmen und zu speichern.

Die Konfigurations-Vorrichtung 2 ist anschließend dazu eingerichtet, den neu bestimmten zumindest einen Verfahrensparameter an die Raum-Steuervorrichtungen 100-105 zur weiteren Verwendung im Regel-Verfahren zu übertragen.

Die Gebäude-Daten 5 umfassen bauphysikalische Eigenschaften des Gebäudes 10 und der beiden Räume 11 und 12. Die bauphysikalische Eigenschaftensind dabei nach dem ISO 16739:2013-Standard für BIM-Daten definiert.

Die Gebäude-Daten 5 umfassen auch technischen Eigenschaften der Sensoren 120-129 und der Aktuatoren 130-137.

Die Regel-Daten 6 umfassen funktionale Zusammenhänge zwischen den bauphysikalischen Eigenschaften und technischen Eigenschaften, sowie einen oder mehrere Regelkreis-Parameter.

Die Regel-Daten 6 umfassen ferner funktionale Zusammenhänge zwischen den Aktuatoren 130-137 und den Sensoren 120-129.

Der zumindest eine Verfahrensparameter kann mittels einem in der Datenbank 4 hinterlegten Expertensystem oder einem System, welches ein Verfahren auf Basis einer Ontologie verwendet, bestimmt sein.

Es ist ferner eine Außensensor-Vorrichtung 30 umfasst, welche dazu eingerichtet ist, Außensensor-Messgrößen von Außensensoren 40, 41 als Außen-Ist-Wert-Größen 50, 51 zu erfassen, beispielsweise ein Temperatur-, ein Niederschlags- oder CO2-Wert. Die Konfigurations-Vorrichtung 2 ist dazu eingerichtet, die Außen-Ist-Wert-Größen 50, 51 abzufragen und und in Form von Außen-Daten 7 in der Datenbank 4 zu speichern, welcher bei der Bestimmung des zumindest einen Verfahrensparameters berücksichtigt wird.

Die Analyse-Vorrichtung 3 ist dazu eingerichtet, bei der Neubestimmung des zumindest einen Verfahrensparameters die Außen-Ist-Wert-Größen 50, 51 zu berücksichtigen.

Die Gebäude-Daten 5 beschrieben Eigenschaften hinsichtlich thermischer Durchlässigkeit, Luft-Ventilation oder Beleuchtung des Gebäudes 10 bzw. der Räume 11, 12.

Die Konfigurations-Vorrichtung 2 umfasst ferner eine Zeitbasis 8 und ist dazu eingerichtet, nach einer von der Zeitbasis 8 vorgegebenen Zeitdauer, beispielsweise stündlich oder monatlich, den zumindest einen Verfahrensparameter für das Regel-Verfahren der Raum-Steuervorrichtungen 100-105 von der Analyse-Vorrichtung 3 neu zu bestimmen und an die entsprechenden Raum-Steuervorrichtungen 100-105 zu übertragen. Die Zeitdauer für eine Neubestimmung kann auch von Raum zu Raum unterschiedlich sein, das heißt, es kann ausreichend sein, wenn beispielsweise für in Richtung Norden ausgerichtete Räume eine längere Zeitdauer definiert wird, als für Räume, welche in Richtung Süden ausgerichtet sind.

### Bezugszeichenliste:

- 1: Gebäudeautomatisations-Vorrichtung
- 2: Konfigurations-Vorrichtung
- 3: Analyse-Vorrichtung
- 4: Datenbank
- 5: Gebäude-Daten
- 6: Regel-Daten
- 7: Außen-Daten
- 8: Zeitbasis
- 10: Gebäude
- 11, 12: Raum
- 20: Installations-Bus
- 30: Außensensor-Vorrichtung
- 40, 41: Außensensor
- 50, 51: Außen-Ist-Wert-Parameter
- 100-105: Raum-Steuervorrichtung für Stellgröße (z.B. Temperatur, Ventilation, Licht, Luftfeuchtigkeit, CO2)
- 110-115: Regelungs-Vorrichtung
- 120-129: Sensor
- 130-137: Aktuator/ Stellglied
- 140-149: Ist-Wert-Größe/ Regelgröße
- 150-155: Soll-Wert-Größe/ Stellgröße
- 160-165: Soll-Wert-Speicher
- 170-177: Regel-Größe

## Patentansprüche

1. Gebäudeautomatisations-Vorrichtung (1) für zumindest ein Gebäude (10) mit zumindest einem Raum (11, 12), umfassend
zumindest eine Raum-Steuervorrichtung (100-105) umfassend zumindest eine Regelungs-Vorrichtung (110-115) und einen Soll-Wert-Speicher (160-165), welche Raum-Steuervorrichtung (100-105) dazu eingerichtet ist, mittels der zumindest einen Regelungs-Vorrichtung (110-115) für den zumindest einen Raum aus zumindest einer Ist-Wert-Größe (140-149) und zumindest einer, in dem Soll-Wert-Speicher (160-165) gespeicherten Soll-Wert-Größe (150-155) unter Verwendung eines Regel-Verfahrens zumindest eine Regel-Größe (170-177) zu bestimmen und auszugeben, wobei das Regel-Verfahren durch zumindest einen Verfahrensparameter bestimmt ist,
und zumindest einen Sensor (120-129), von welchem zumindest eine Sensormessgröße als zumindest eine Ist-Wert-Größe (140-149) bestimmbar ist und die zumindest eine Ist-Wert-Größe (140-149) von der zumindest einen Raum-Steuervorrichtung (100-105) abrufbar ist,
und zumindest einen Aktuator (130-137), zu welchem die zumindest eine Regel-Größe (170-177) von der zumindest einen Raum-Steuervorrichtung (100-105) übertragbar ist und welcher anhand der zumindest einen Regel-Größe (170-177) ansteuerbar ist,
**dadurch gekennzeichnet, dass** die Gebäudeautomatisations-Vorrichtung (1) ferner eine Konfigurations-Vorrichtung (2) mit einer Analyse-Vorrichtung (3) und einer Datenbank (4), in welcher Datenbank (4) Gebäude-Daten (5) und Regel-Daten (6) gespeichert sind, umfasst,
und die Konfigurations-Vorrichtung (2) dazu eingerichtet ist,
a) die zumindest eine Ist-Wert-Größe (140-149) und die zumindest eine Soll-Wert-Größe (150-155) von der zumindest einen Raum-Steuervorrichtung (100-105) abzufragen, und
b) den zumindest einen Verfahrensparameter aus Gebäude-Daten (5), Regel-Daten (6) und der gespeicherten zumindest einen Ist-Wert-Größe (140-149) und der zumindest einen Soll-Wert-Größe (150-155) neu zu bestimmen, und
c) den neu bestimmten zumindest einen Verfahrensparameter an die zumindest eine Raum-Steuervorrichtung (100-105) zur weiteren Verwendung im Regel-Verfahren zu übertragen.

2. Gebäudeautomatisations-Vorrichtung (1) nach dem vorhergehenden Anspruch, wobei die Gebäude-Daten (5) zumindest eine bauphysikalische Eigenschaft des zumindest einen Gebäudes oder des zumindest einen Raumes, welche bevorzugt nach dem ISO 16739:2013-Standard für BIM-Daten definiert sind, sowie zumindest eine technische Eigenschaft des zumindest einen Sensors (120-129) oder des zumindest einen Aktuators (130-137) umfassen.

3. Gebäudeautomatisations-Vorrichtung (1) nach dem vorhergehenden Anspruch, wobei die Regel-Daten (6) zumindest einen funktionalen Zusammenhang zwischen der zumindest einen bauphysikalischen Eigenschaft und der zumindest einen technischen Eigenschaft umfassen, sowie bevorzugt zumindest einen Regelkreis-Parameter aufweisen.

4. Gebäudeautomatisations-Vorrichtung (1) nach einem der vorhergehenden Ansprüche, wobei die Regel-Daten (6) zumindest einen funktionalen Zusammenhang zwischen dem zumindest einen Aktuator (130-137) und dem zumindest einen Sensor (120-129) umfassen.

5. Gebäudeautomatisations-Vorrichtung (1) nach einem der vorhergehenden Ansprüche, wobei der zumindest eine Verfahrensparameter mittels einem in der Datenbank (4) hinterlegten Expertensystem oder einem System, welches ein Verfahren auf Basis einer Ontologie verwendet, bestimmt ist.

6. Gebäudeautomatisations-Vorrichtung (1) nach einem der vorhergehenden Ansprüche, wobei ferner zumindest eine Außensensor-Vorrichtung (30) umfasst ist, welche dazu eingerichtet ist, zumindest eine Außensensor-Messgröße zumindest eines Außensensors (40, 41) als zumindest eine Außen-Ist-Wert-Größe (50, 51) zu erfassen, und die Analyse-Vorrichtung (3) dazu eingerichtet ist, bei der Neubestimmung des zumindest einen Verfahrensparameters die zumindest eine Außen-Ist-Wert-Größe (50, 51) zu berücksichtigen, und vorzugsweise die Konfigurations-Vorrichtung (2) dazu eingerichtet ist, die zumindest eine Außen-Ist-Wert-Größe (50, 51) in Form von Außen-Daten (7) in der Datenbank (4) zu speichern.

7. Gebäudeautomatisations-Vorrichtung (1) nach einem der vorhergehenden Ansprüche, wobei die Gebäude-Daten (5) zumindest Eigenschaften hinsichtlich thermischer Durchlässigkeit, Luft-Ventilation oder Beleuchtung des zumindest einen Gebäudes (10) und/oder des zumindest einen Raumes (11,12) beschreiben.

8. Gebäudeautomatisations-Vorrichtung (1) nach einem der vorhergehenden Ansprüche, wobei die Konfigurations-Vorrichtung (2) ferner eine Zeitbasis (8) umfasst und dazu eingerichtet ist, nach einer von der Zeitbasis (8) vorgegebenen Zeitdauer den zumindest einen Verfahrensparameter für das Regel-Verfahren der zumindest einen Raum-Steuervorrichtung (100-105) von der Analyse-Vorrichtung (3) neu zu bestimmen und an die zumindest eine Raum-Steuervorrichtung (100-105) zu übertragen.

9. Gebäudeautomatisations-Verfahren für eine Gebäudeautomatisations-Vorrichtung (1) für zumindest ein Gebäude (10) mit zumindest einem Raum (11, 12),
wobei mittels zumindest einer Regelungs-Vorrichtung (110-115) für den zumindest einen Raum aus zumindest einer Ist-Wert-Größe (140-149) und zumindest einer, in einem Soll-Wert-Speicher (160-165) gespeicherten Soll-Wert-Größe (150-155) unter Verwendung eines Regel-Verfahrens zumindest eine Regel-Größe (170-177) bestimmt und ausgegeben wird, wobei das Regel-Verfahren durch zumindest einen Verfahrensparameter bestimmt wird,
und wobei von zumindest einem Sensor (120-129)zumindest eine Sensormessgröße als zumindest eine Ist-Wert-Größe (140-149) bestimmt wird und die zumindest eine Ist-Wert-Größe (140-149) von der zumindest einen Raum-Steuervorrichtung (100-105) abgerufen wird,
und wobei die zumindest eine Regel-Größe (170-177) von der zumindest einen Raum-Steuervorrichtung (100-105) an zumindest einen Aktuator (130-137) übertragen wird, wobei der zumindest eine Aktuator (170-177) anhand der zumindest einen Regel-Größe (170-177) angesteuert wird,
**dadurch gekennzeichnet, dass** von einer Konfigurations-Vorrichtung (2) der Gebäudeautomatisations-Vorrichtung (1), in welcher Gebäude-Daten (5) und Regel-Daten (6) gespeichert sind, folgende Verfahrensschritte ausgeführt werden:
a) Abfragen der zumindest einen Ist-Wert-Größe (140-149) und der zumindest einen Soll-Wert-Größe (150-155) von der zumindest einen Raum-Steuervorrichtung (100-105),
b) Neubestimmen des zumindest einen Verfahrensparameters aus Gebäude-Daten (5), Regel-Daten (6) und der zumindest einen Ist-Wert-Größe (140-149) und der zumindest einen Soll-Wert-Größe (150-155),
c) Übertragen des neu bestimmten zumindest einen Verfahrensparameters an die zumindest eine Raum-Steuervorrichtung (100-105) zur weiteren Verwendung im Regel-Verfahren.

10. Gebäudeautomatisations-Verfahren nach Anspruch 9, wobei die Gebäude-Daten (5) zumindest eine bauphysikalische Eigenschaft des zumindest einen Gebäudes oder des zumindest einen Raumes, welche bevorzugt nach dem ISO 16739:2013-Standard für BIM-Daten definiert sind, sowie zumindest eine technische Eigenschaft des zumindest einen Sensors (120-129) oder des zumindest einen Aktuators (130-137) umfassen.

11. Gebäudeautomatisations-Verfahren nach einem der Ansprüche 9 oder 10, wobei die Regel-Daten (6) zumindest einen funktionalen Zusammenhang zwischen der zumindest einen bauphysikalischen Eigenschaft und der zumindest einen technischen Eigenschaft umfassen, sowie bevorzugt zumindest einen Regelkreis-Parameter aufweisen.

12. Gebäudeautomatisations-Verfahren nach einem der Ansprüche 9 bis 11, wobei die Regel-Daten (6) zumindest einen funktionalen Zusammenhang zwischen dem zumindest einen Aktuator (130-137) und dem zumindest einen Sensor (120-129) umfassen.

13. Gebäudeautomatisations-Verfahren nach einem der Ansprüche 9 bis 12, wobei der zumindest eine Verfahrensparameter mittels einem in der Datenbank (4) hinterlegten Expertensystem oder einem System, welches ein Verfahren auf Basis einer Ontologie verwendet, bestimmt wird.

14. Gebäudeautomatisations-Verfahren nach einem der Ansprüche 9 bis 13, wobei zumindest eine Außensensor-Messgröße zumindest eines Außensensors (40, 41) zumindest einer Außensensor-Vorrichtung (30) als zumindest eine Außen-Ist-Wert-Größe (50, 51) erfasst wird, und bei der Neubestimmung des zumindest einen Verfahrensparameters im Schritt c) von der Analyse-Vorrichtung (3) die zumindest eine Außen-Ist-Wert-Größe (50, 51) berücksichtigt wird.

15. Gebäudeautomatisations-Verfahren nach einem der Ansprüche 9 bis 14, wobei die Gebäude-Daten (5) zumindest Eigenschaften hinsichtlich thermischer Durchlässigkeit, Ventilation oder Beleuchtung, eines Gebäudes (10) und/oder eines darin befindlichen Raumes (11, 12), wofür die Gebäudeautomatisations-Vorrichtung (1) vorgesehen ist, beschreiben.

16. Gebäudeautomatisations-Verfahren nach einem der Ansprüche 9 bis 15, wobei nach einer von einer Zeitbasis (8) der Konfigurations-Vorrichtung (2) vorgegebenen Zeitdauer der zumindest eine Verfahrensparameter für das Regel-Verfahren der zumindest einen Raum-Steuervorrichtung (100-105) von der Analyse-Vorrichtung (3) neu bestimmt wird und an die zumindest eine Raum-Steuervorrichtung (100-105) übertragen wird.
